# EUROPÄISCHE PATENTANMELDUNG

(11) **EP 4 714 602 A1**
(43) Veröffentlichungstag der Anmeldung: **25.03.2026**
(21) Anmeldenummer: 24201019.7
(22) Anmeldetag: 18.09.2024
(51) Int. Cl.: B25D 11/06, F16H 23/06

(54) **KOPPLUNGSEINRICHTUNG FÜR EIN ELEKTROWERKZEUG, UND ELEKTROWERKZEUG**

(71) Anmelder: Hilti Aktiengesellschaft, 9494 Schaan (LI)
(72) Erfinder: Fleck, Joshua, 80469 München (DE); Nagel, Benedikt, 86911 Dießen am Ammersee (DE); Britz, Rory, 82319 Starnberg (DE)
(74) Vertreter: Hilti Aktiengesellschaft Corporate Intellectual Property

(57) **Zusammenfassung**

Die Erfindung betrifft eine Kopplungseinrichtung (1) für ein Elektrowerkzeug (2) mit einem Schlagwerk (3), insbesondere einem pneumatischen Schlagwerk, aufweisend einen Stift (4), der einenends mit einem äußeren Ring (5) eines Taumelscheibenlagers (6) verbunden ist und andernends mit einem Lagerbolzen (8) wechselwirkt, wobei auf dem Lagerbolzen (8) ein Gleitelement (9) mit einer ersten Durchgangsbohrung (10) und einer senkrecht zur ersten Durchgangsbohrung (10) ausgerichteten zweiten Durchgangsbohrung (11) angeordnet ist und wobei in der ersten Durchgangsbohrung (10) der Lagerbolzen (8) und in der zweiten Durchgangsbohrung (11) der Stift (4) aufgenommen ist.

Die Erfindung betrifft ferner ein Elektrowerkzeug (2) mit einem Schlagwerk (3) und einer erfindungsgemäßen Kopplungseinrichtung (1) zur Kopplung eines Antriebszylinders (14) des Schlagwerks (3) mit einer Antriebswelle (15).

## Beschreibung

Die Erfindung betrifft eine Kopplungseinrichtung für ein Elektrowerkzeug mit einem Schlagwerk, insbesondere einem pneumatischen Schlagwerk, gemäß dem Oberbegriff des Anspruchs 1. Darüber hinaus betrifft die Erfindung ein Elektrowerkzeug mit einer erfindungsgemäßen Kopplungseinrichtung.

Anwendungsbereich der Erfindung sind vornehmlich handgehaltene Elektrowerkzeuge, insbesondere Bohr- und/oder Meißelhämmer. Diese weisen ein Schlagwerk zur Aufbringung der notwendigen Schlagenergie auf das jeweilige Werkzeug auf.

### Stand der Technik

Bekannt sind Elektrowerkzeuge mit einem Schlagwerk, das über einen elektrischen Antrieb mit einer Antriebswelle angetrieben wird. Die Drehbewegung der Antriebswelle muss hierzu in eine translatorische Bewegung eines Arbeitszylinders des Schlagwerks gewandelt werden. Die Antriebswelle und der Arbeitszylinder sind daher über eine Kopplungseinrichtung verbunden, welche die notwendige Antriebskraft überträgt und wandelt.

Eine derartige Kopplungseinrichtung geht beispielhaft aus der DE 10 2020 207 591 A1 hervor. Sie umfasst eine Pendelstange, die einenends über ein Pendellager mit einer Antriebswelle verbunden ist. Andernends ist die Pendelstange mit einem Kolbenstift einer Kolbenbaugruppe verbunden, der in zwei zueinander beabstandeten Kolbenarmen eines Kolbenkörpers der Kolbenbaugruppe drehbar gelagert ist. Im Betrieb bewegt sich die Pendelstange relativ zu den Kolbenarmen. Um den Verschleiß zwischen der Pendelstange und den Kolbenarmen zu reduzieren, ist üblicherweise beidseits der Pendelstange jeweils eine Unterlegscheibe vorgesehen, die bei der Montage auf den Kolbenstift aufgesetzt und ausgerichtet werden muss. Dies ist aufwendig und fehleranfällig. In der DE 10 2020 207 591 A1 werden daher die beiden Unterlegscheiben durch eine einteilige Unterlegscheibenvorrichtung ersetzt, die zwei in einem Abstand zueinander angeordnete und über einen Fußabschnitt verbundene Seitenplatten mit jeweils einer Durchgangsbohrung aufweist. Die Durchgangsbohrungen sind konzentrisch zueinander angeordnet, so dass bei der Montage der Kolbenstift durch diese hindurchgeführt werden kann.

Kopplungseinrichtungen der vorstehend genannten Art unterliegen dem Verschleiß und schränken somit die Lebensdauer des Elektrowerkzeugs ein. Der Verschleiß tritt insbesondere im Kontaktbereich der relativ zueinander beweglichen Teile der Kopplungseinrichtung aufgrund Reibung auf. Verschleißverstärkend können in den Kontaktbereich eindringende Partikel, beispielsweise Staubpartikel, wirken. Mit fortschreitendem Verschleiß nimmt das Spiel zwischen den relativ zueinander beweglichen Teilen der Kopplungseinrichtung zu. Dies wiederum verursacht Vibrationen, so dass die Belastung und damit der Verschleiß weiter steigen. In der Folge kann es zu einem Ausfall des Elektrowerkzeugs kommen.

Ausgehend von dem vorstehend genannten Stand der Technik liegt der vorliegenden Erfindung die Aufgabe zugrunde, eine Kopplungseinrichtung für ein Elektrowerkzeug mit einem Schlagwerk bereitzustellen, das weniger verschleißanfällig ist, so dass die Lebensdauer des Elektrowerkzeugs steigt.

Zur Lösung der Aufgabe wird die Kopplungseinrichtung mit den Merkmalen des Anspruchs 1 vorgeschlagen. Vorteilhafte Weiterbildungen der Erfindung sind den Unteransprüchen zu entnehmen. Darüber hinaus wird ein Elektrowerkzeug mit einer erfindungsgemäßen Kopplungseinrichtung angegeben.

### Offenbarung der Erfindung

Vorgeschlagen wird eine Kopplungseinrichtung für ein Elektrowerkzeug mit einem Schlagwerk, insbesondere einem pneumatischen Schlagwerk, aufweisend einen Stift, der einenends mit einem äußeren Ring eines Taumelscheibenlagers verbunden ist und andernends mit einem Lagerbolzen wechselwirkt und insbesondere in einer Bohrung des Lagerbolzens aufgenommen ist, wobei auf dem Lagerbolzen ein Gleitelement mit einer ersten Durchgangsbohrung und einer senkrecht zur ersten Durchgangsbohrung ausgerichteten zweiten Durchgangsbohrung angeordnet ist und wobei in der ersten Durchgangsbohrung der Lagerbolzen und in der zweiten Durchgangsbohrung der Stift aufgenommen ist.

Das Gleitelement ersetzt die eingangs erwähnten üblichen zwei Unterlegscheiben bzw. die eingangs erwähnte Unterlegscheibenvorrichtung. Im Unterschied zu diesen weist das Gleitelement reibungsmindernde Eigenschaften auf und verringert auf diese Weise den Verschleiß in einem auf Reibung beanspruchten Kontaktbereich des Gleitelements, beispielsweise in einem Kontaktbereich des Gleitelements mit mindestens einem weiteren Element der Kopplungseinrichtung, insbesondere dem Lagerbolzen und/oder dem Stift, und/oder in einem Kontaktbereich des Gleitelements mit einem den Lagerbolzen aufnehmenden Antriebszylinder des Elektrowerkzeugs. Der verringerte Verschleiß wiederum führt zu einer Steigerung der Lebensdauer des Elektrowerkzeugs.

Im Unterschied zu den üblichen zwei Unterlegscheiben weist das Gleitelement zudem den Vorteil auf, dass die Montage der Kopplungseinrichtung erleichtert wird. Denn die Montage des einen Gleitelements erfordert im Unterschied zur Montage von zwei Unterlegscheiben lediglich einen Montageschritt. Bei der Montage wird das Gleitelement aufgrund der beiden Durchgangsbohrungen zudem automatisch ausgerichtet, so dass ein weiterer Arbeitsschritt zum Ausrichten des Gleitelements entfällt.

Die reibungsmindernden Eigenschaften eines Gleitelements sind üblicherweise auf ein reibungsminderndes Material zurückzuführen, aus dem das Gleitelement zumindest bereichsweise gefertigt oder mit dem das Gleitelement zumindest bereichsweise beschichtet ist.

Es kann vorgesehen sein, dass der Stift und der Lagerbolzen aneinander vorbeigeführt werden und nur durch das Gleitelement gekoppelt werden. Darüber hinaus kann es vorgesehen sein, dass der Lagerbolzen eine insbesondere zylindrische Kerbe bekommen, so dass der Druckstoß über einen direkten Kontakt zwischen dem Stift und den Lagerbolzen übertragen wird, der Rückhub aber über das Gleitelement gekoppelt wird.

In Weiterbildung der Erfindung wird daher vorgeschlagen, dass das Gleitelement zumindest bereichsweise aus einem Polymermaterial gefertigt oder zumindest bereichsweise mit einem Polymermaterial beschichtet ist. Bei dem Polymermaterial kann es sich beispielsweise um Polytetrafluorethylen handeln. Ein Polymermaterial ist zudem in der Lage Partikel zu binden, so dass die abrasive Wirkung von Partikeln gemindert wird, die in einen auf Reibung beanspruchten Kontaktbereich des Gleitelements eindringen.

Bevorzugt ist das Gleitelement ein Spritzgussteil. Als solches ist es besonders einfach und kostengünstig herstellbar. Zur weiteren Vereinfachung der Herstellung des Gleitelements wird vorgeschlagen, dass das Gleitelement vollständig aus einem Polymermaterial gefertigt ist.

Des Weiteren bevorzugt ist bzw. sind der Lagerbolzen und/oder der Stift der Kopplungseinrichtung aus Metall, beispielsweise aus Stahl, gefertigt. Für den Lagerbolzen und/oder den Stift kann somit ein Material gewählt werden, das eine besonders hohe Festigkeit aufweist und demzufolge besonders hoch belastet werden kann. Auf diese Weise kann die Lebensdauer der Kopplungseinrichtung und damit des Elektrowerkzeugs weiter gesteigert werden. Ist das Gleitelement zumindest bereichsweise, insbesondere im Kontaktbereich mit dem Lagerbolzen und/oder im Kontaktbereich mit dem Stift, aus einem Polymermaterial gefertigt oder mit einem Polymermaterial beschichtet, ergibt sich die Materialpaarung Metall/Polymermaterial, die im Unterschied zur Materialpaarung Metall/Metall den Verschleiß im Kontaktbereich mindert.

Gemäß einer bevorzugten Ausführungsform der Erfindung weist das Gleitelement einen Körper mit zwei parallel verlaufenden Gleitflächen auf, die senkrecht zu einer Längsachse des Lagerbolzens ausgerichtet sind. Wird der Lagerbolzen in den Lagerbohrungen zweier Arme eines Antriebszylinders drehbar gelagert, der zur Ausbildung der Arme endseitig gabelförmig ausgeführt ist, reduzieren die beiden Gleitflächen die Reibung im Kontaktbereich des Gleitelements mit den Armen des Antriebszylinders.

Vorteilhafterweise ist das Gleitelement als Hohlzylinder ausgeführt. In diesem Fall können die beiden Stirnflächen des Hohlzylinders die beiden parallel verlaufenden Gleitflächen des Gleitelements ausbilden. Die den Lagerbolzen aufnehmende erste Durchgangsbohrung erstreckt sich dann von Stirnfläche zu Stirnfläche, vorzugsweise verläuft sie parallel zur Längsachse des Hohlzylinders. Da die den Stift aufnehmende zweite Durchgangsbohrung senkrecht zur ersten Durchgangsbohrung verläuft, verläuft sich auch senkrecht zur Längsachse des Hohlzylinders.

Bevorzugt weist der Hohlzylinder außenumfangseitig mindestens zwei an sich gegenüberliegenden Seiten angeordnete Abflachungen auf. Im Bereich der Abflachungen kann die den Stift aufnehmende zweite Durchgangsbohrung angeordnet sein, so dass sich diese von Abflachung zu Abflachung erstreckt. Die mindestens zwei Abflachungen erleichtern die Ausbildung der zweiten Durchgangsbohrung. Ferner reduzieren sie das Gewicht des Gleitelements. Alternativ oder ergänzend kann der Hohlzylinder außenumfangseitige Längsnuten zur Gewichtsreduzierung aufweisen.

Darüber hinaus wird ein Elektrowerkzeug mit einem Schlagwerk, insbesondere einem pneumatischen Schlagwerk, und einer erfindungsgemäßen Kopplungseinrichtung zur Kopplung eines Antriebszylinders des Schlagwerks mit einer Antriebswelle vorgeschlagen. Der Antriebszylinder weist dabei eine in einem Abstand parallel zu einer Rotationsachse der Antriebswelle verlaufende Längsachse auf. Mit Hilfe der Kopplungseinrichtung kann eine Drehbewegung der Antriebswelle in eine translatorische Bewegung des Antriebszylinders des Schlagwerks gewandelt werden. Zugleich kann über das Gleitelement der Kopplungseinrichtung die Reibung im Kontaktbereich der Kopplungseinrichtung mit dem Antriebszylinder reduziert werden. Dies wiederum hat zur Folge, dass die Lebensdauer des Elektrowerkzeugs steigt.

Bevorzugt ist der Antriebszylinder des Schlagwerks endseitig gabelförmig ausgeführt und bildet zwei Arme mit jeweils einer Lagerbohrung aus, in denen der Lagerbolzen der Kopplungseinrichtung drehbar gelagert ist. Der Abstand der beiden Arme zueinander und die Abmessungen des Gleitelements sind vorzugsweise in der Weise aufeinander abgestimmt, dass das auf dem Lagerbolzen angeordnete Gleitelement zur flächigen Anlage an den Armen des Antriebszylinders gelangt. Die flächige Anlage führt zu einem geringeren Kontaktdruck im jeweiligen Kontaktbereich und dadurch zu einer weiteren Verringerung des Verschleißes im jeweiligen Kontaktbereich.

Als weiterbildende Maßnahme wird daher vorgeschlagen, dass die Arme des Antriebszylinders einander zugewandte, parallel verlaufende Seitenflächen aufweisen, die das Gleitelement, insbesondere die Gleitflächen des Gleitelements, kontaktieren. Die einander zugewandten, parallel verlaufenden Seitenflächen ermöglichen eine flächige Anlage des Gleitelements an den Armen des Arbeitszylinders, ohne dass die Drehbeweglichkeit des in den Lagerbohrungen der Arme aufgenommenen Lagerbolzens blockiert wird.

Des Weiteren bevorzugt ist der äußere Ring des Taumelscheibenlagers über Lagerkugeln auf einem mit der Antriebswelle verbundenen inneren Ring des Taumelscheibenlagers gelagert. Die Lagerung über Lagerkugeln ermöglicht eine Taumelbewegung des äußeren Rings gegenüber dem inneren Ring, wobei der mit dem äußeren Ring verbundene Stift der Kopplungseinrichtung eine Art Pendelbewegung ausführt, über die der Antriebszylinder hin und her bewegt wird. Die Drehbewegung der Antriebswelle kann auf diese Weise in eine translatorische Bewegung des Antriebszylinders gewandelt werden.

Eine bevorzugte Ausführungsform der Erfindung wird nachfolgend anhand der beigefügten Zeichnungen näher beschrieben. Diese zeigen:
- Fig. 1: eine perspektivische Darstellung einer bevorzugten Ausführungsform einer erfindungsgemäßen Kopplungseinrichtung für ein Elektrowerkzeug mit Schlagwerk,
- Fig. 2: eine perspektivische Darstellung des Gleitelements der Kopplungseinrichtung der Figur 1 und

- Fig. 3: einen Längsschnitt durch einen Ausschnitt eines Elektrowerkzeug, aufweisend die Kopplungseinrichtung der Figur 1.

### Ausführliche Beschreibung der Zeichnungen

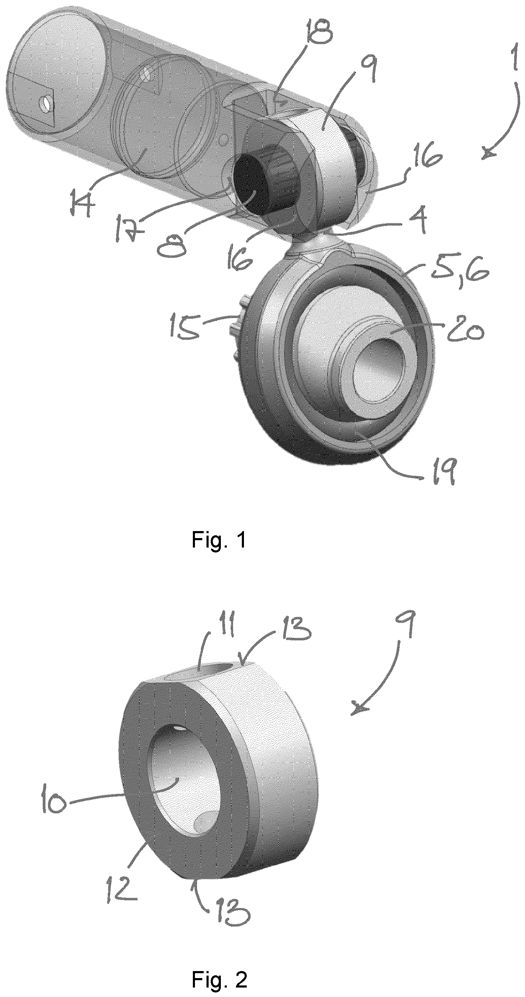

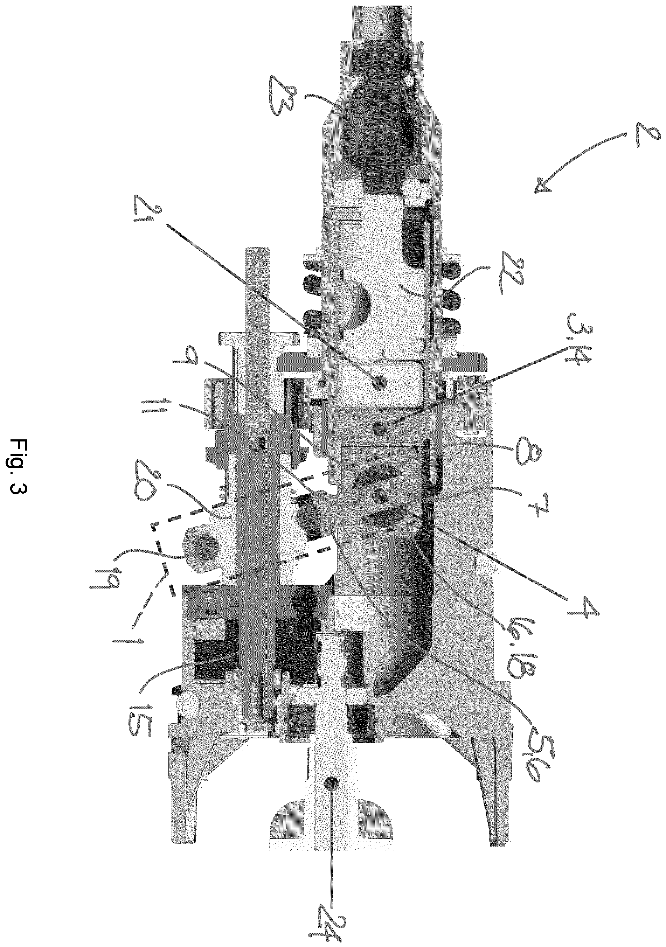

Der Figur 1 ist eine erfindungsgemäße Kopplungseinrichtung 1 für ein Elektrowerkzeug 2 mit Schlagwerk 3, beispielsweise einem pneumatischen Schlagwerk 3 analog der Figur 3 dargestellt. Die Kopplungseinrichtung 1 weist einen Stift 4 auf, der an einem ersten Ende mit einem Ring 5 verbunden ist. Bei dem Ring 5 handelt es sich um den äußeren Ring 5 eines Taumelscheibenlagers 6, der über Lagerkugeln 19 auf einem inneren Ring 20 des Taumelscheibenlagers 6 gelagert ist. Der innere Ring 20 ist auf einer Antriebswelle 15 angeordnet und mit dieser koppelbar verbunden. Andernends ist der Stift 4 in einer Bohrung 7 eines Lagerbolzens 8 aufgenommen, der in Lagerbohrungen 17 drehbar gelagert ist. Die Lagerbohrungen 17 sind in zwei Armen 16 eines Antriebszylinders 14 des Schlagwerks 3 ausgebildet, der zur Ausbildung der Arme 16 endseitig gabelförmig ausgeführt ist. Über die Kopplungseinrichtung 1 kann auf diese Weise eine Drehbewegung der Antriebswelle 15 in eine translatorische Bewegung des Antriebszylinders 14 gewandelt werden.

Die in der Figur 1 dargestellte Kopplungseinrichtung 1 weist ein Gleitelement 9 in Form eines beidseits abgeflachten Hohlzylinders auf. Wie insbesondere der Figur 3 zu entnehmen ist bildet der Hohlzylinder eine parallel zu seiner Längsachse verlaufende erste Durchgangsbohrung 10 zur Aufnahme des Lagerbolzens 8 aus. Senkrecht hierzu ist eine zweite Durchgangsbohrung 11 zur Aufnahme des Stifts 4 im Hohlzylinder ausgebildet, die sich von einer außenumfangseitigen ersten Abflachung 13 bis zu einer zweiten Abflachung 13 des Hohlzylinders auf der gegenüberliegenden Seite erstreckt. Die beiden Stirnflächen des Hohlzylinders bilden Gleitflächen 12 aus, die zur Anlage an parallel verlaufende Seitenflächen 18 der Arme 16 gelangen. Im Betrieb des Elektrowerkzeugs 2 bewegen sich die Gleitflächen 12 des Gleitelements 9 relativ zu den Seitenflächen 18 der Arme 16, so dass die Seitenflächen 18 auf Reibung beansprucht werden. Da das Gleitelement 9 zumindest im Bereich der Gleitflächen 12 aus einem reibungsmindernden Material, vorzugsweise einem Polymermaterial, gefertigt ist, kann der Verschleiß im Kontaktbereich verringert werden. Zugleich steigt die Lebensdauer des Elektrowerkzeugs 2.

Der Figur 3 ist die Kopplungseinrichtung 1 nach dem Einbau in ein Elektrowerkzeug 2 mit Schlagwerk 3 zu entnehmen. Das Schlagwerk 3 ist vorliegend als pneumatisches Schlagwerk 3 ausgeführt. Der Antriebszylinder 14 des Schlagwerks 3 ist hierzu über eine Luftfeder 21 mit einem Schlagkolben 22 zur Einwirkung auf einen Döpper23 verbunden. Die Antriebswelle 15 ist mit einer Motorwelle 24 eines nicht näher dargestellten Elektromotors gekoppelt.

### Bezugszeichenliste

- 1: Kopplungseinrichtung
- 2: Elektrowerkzeug
- 3: Schlagwerk
- 4: Stift
- 5: Ring
- 6: Taumelscheibenlager
- 7: Bohrung
- 8: Lagerbolzen
- 9: Gleitelement
- 10: Durchgangsbohrung
- 11: Durchgangsbohrung
- 12: Gleitfläche
- 13: Abflachung
- 14: Antriebszylinder
- 15: Antriebswelle
- 16: Arm
- 17: Lagerbohrung
- 18: Seitenfläche
- 19: Lagerkugel
- 20: Ring
- 21: Luftfeder
- 22: Schlagkolben
- 23: Döpper
- 24: Motorwelle

## Patentansprüche

1. Kopplungseinrichtung (1) für ein Elektrowerkzeug (2) mit einem Schlagwerk (3), insbesondere einem pneumatischen Schlagwerk, aufweisend einen Stift (4), der einenends mit einem äußeren Ring (5) eines Taumelscheibenlagers (6) verbunden ist und andernends mit einem Lagerbolzen (8) wechselwirkt, wobei auf dem Lagerbolzen (8) ein Gleitelement (9) mit einer ersten Durchgangsbohrung (10) und einer senkrecht zur ersten Durchgangsbohrung (10) ausgerichteten zweiten Durchgangsbohrung (11) angeordnet ist und wobei in der ersten Durchgangsbohrung (10) der Lagerbolzen (8) und in der zweiten Durchgangsbohrung (11) der Stift (4) aufgenommen ist.

2. Kopplungseinrichtung (1) nach Anspruch 1,
**dadurch gekennzeichnet, dass** das Gleitelement (9) zumindest bereichsweise aus einem Polymermaterial gefertigt oder zumindest bereichsweise mit einem Polymermaterial beschichtet ist.

3. Kopplungseinrichtung (1) nach Anspruch 1 oder 2,
**dadurch gekennzeichnet, dass** das Gleitelement (9) ein Spritzgussteil ist.

4. Kopplungseinrichtung (1) nach einem der vorhergehenden Ansprüche,
**dadurch gekennzeichnet, dass** der Lagerbolzen (8) und/oder der Stift (4) aus Metall, beispielsweise aus Stahl, gefertigt ist bzw. sind.

5. Kopplungseinrichtung (1) nach einem der vorhergehenden Ansprüche,
**dadurch gekennzeichnet, dass** das Gleitelement (9) einen Körper mit zwei parallel verlaufenden Gleitflächen (12) aufweist, die senkrecht zu einer Längsachse des Lagerbolzens (8) ausgerichtet sind.

6. Kopplungseinrichtung (1) nach einem der vorhergehenden Ansprüche,
**dadurch gekennzeichnet, dass** das Gleitelement (9) als Hohlzylinder ausgeführt ist, wobei vorzugsweise der Hohlzylinder außenumfangseitig mindestens zwei an sich gegenüberliegenden Seiten angeordnete Abflachungen (13) und/oder Längsnuten aufweist.

7. Elektrowerkzeug (2) mit einem Schlagwerk (3), insbesondere einem pneumatischen Schlagwerk (3), und einer Kopplungseinrichtung (1) nach einem der der vorhergehenden Ansprüche zur Kopplung eines Antriebszylinders (14) des Schlagwerks (3) mit einer Antriebswelle (16), wobei der Antriebszylinder (14) eine in einem Abstand parallel zu einer Rotationsachse der Antriebswelle (15) verlaufende Längsachse aufweist.

8. Elektrowerkzeug (2) nach Anspruch 7,
**dadurch gekennzeichnet, dass** der Antriebszylinder (14) endseitig gabelförmig ausgeführt ist und zwei Arme (16) mit jeweils einer Lagerbohrung (17) ausbildet, in denen der Lagerbolzen (8) der Kopplungseinrichtung (1) drehbar gelagert ist.

9. Elektrowerkzeug (2) nach Anspruch 8,
**dadurch gekennzeichnet, dass** die Arme (16) des Antriebszylinders (14) einander zugewandte, parallel verlaufende Seitenflächen (18) aufweisen, die das Gleitelement (9), insbesondere die Gleitflächen (12) des Gleitelements (9), kontaktieren.

10. Elektrowerkzeug (2) nach einem der Ansprüche 7 bis 9,
**dadurch gekennzeichnet, dass** der äußere Ring (5) des Taumelscheibenlagers (6) über Lagerkugeln (19) auf einem mit der Antriebswelle (15) verbundenen inneren Ring (20) des Taumelscheibenlagers (6) gelagert ist.
